# EUROPEAN PATENT SPECIFICATION

(11) **EP 0 333 379 B1**
(45) Date of publication and mention of the grant of the patent: **17.05.1995**
(21) Application number: 89302343.2
(22) Date of filing: 09.03.1989
(51) Int. Cl.: B29C 65/02, C08L 5/12

(54) **Process for the jointing of polyolefin bodies**
Verfahren zum Verbinden von Gegenständen aus Polyolefin
Procédé pour la liaison de corps en polyoléfine

(30) Priority: 12.03.1988 GB 8805911
(43) Date of publication of application: 20.09.1989
(73) Proprietor: VICTAULIC PLC, Hitchin Hertfordshire SG4 0AP (GB)
(72) Inventor: Dickinson, Alan John, Cramlington Northumberland (GB); Hill, David John, Huntingdon Cambridgeshire (GB)
(74) Representative: Heath, Peter William Murray

(56) References cited:
- EP-A- 0 222 287
- WO-A-80/02124
- DE-A- 2 026 193
- DE-A- 3 631 082
- FR-A- 2 606 487
- JP-A- 5 859 018
- JP-B- 5 635 893
- JP-B-54 028 874
- US-A- 3 861 972
- US-A- 4 190 485
- US-A- 4 636 272

## Description

This invention relates to an electrofusion welding process for jointing polyolefin bodies, and more particularly such bodies formed of one or more polyolefins capable of forming molecular crosslinking bonds, such as polyethylene and its co-polymers.

It is, of course, known to join polyolefin bodies or articles, such as pipes, where the polyolefin is not crosslinked, by a fusion welding technique of one form or another in which surfaces of the polyolefin articles are caused to become molten, and the surfaces then press together whilst still molten and then allowed to cool and harden so that the two surfaces are "fused" or "fusion-welded" together. The welding together of pipes by means of an electrofusion welding process is known, for example, from FR-A-2606487, EP-A-0222287 and WO-A-8002124.

The use of the crosslinking technique to articles of such polyolefin materials can be extremely beneficial in giving greater permanence of structure, rigidity and resistance to heat to the article which effectively ceases to be of a thermoplastic nature. It has been suggested (see DE-A-2026193) that crosslinked polyolefin bodies can be bonded together using a layer of non-crosslinked polyolefin as a form of hot-melt adhesive. However, a most significant disadvantage is that in practical terms it has not hitherto been found possible to join in a durable and satisfactory manner, by a melting or fusion welding technique, crosslinked polyolefin articles such as pipes, or articles having a crosslinked body portion at the area to be connected, to polyolefin products be they crosslinked or not crosslinked.

It is an object of the present invention to overcome the above mentioned problem and to enable the fusion jointing of a body of crosslinked polyolefin with an article of non-crosslinked polyolefin.

According to the invention, there is provided a method of welding a body of crosslinked polyolefin to a body of non-crosslinked polyolefin, said body of crosslinked polyolefin being a pipe, pipe fitting or sheathing and said body of non-crosslinked polyolefin forming at least an inner surface of an annular electrofusion coupling sleeve and having a heating wire embedded therein, the method comprising bringing together the pipe, pipe fitting or sheathing and annular electrofusion coupling sleeve and heating the heating wire so as to melt an adjacent surface of the coupling sleeve and heat a confronting surface of the pipe, pipe fitting or sheathing, the surfaces being held together with confinement or containment of the molten surface of the non-crosslinked polyolefin body generally to its area of melting, whereby expansion of the materials as they heat and melt generates pressure at the surfaces to provide intimate contact therebetween so as to bring about fusion of the surfaces, and thereafter allowing the coupling sleeve and pipe to cool and harden.

It has been found that by applying a pressure, such as that provided if the two surfaces are pressed together with confinement or containment of the melt to the area of the surface melted, jointing by fusion of the two surfaces of the bodies can surprisingly be achieved.

It is believed that the surprising process of fusion jointing crosslinked polyolefin to non-crosslinked polyolefin is brought about by the combination of heat and pressure caused by containment of the melt under applied pressure allowing polymer long chain molecules from the non-crosslinked polyolefin to enter the molecular interstices of the heated crosslinked polyolefin molecular network and to intermingle with it, providing a strong fusion jointing of the two materials.

The invention is applicable when an electrofusion technique is used, in which a portion of the area of the relevant surface of the non-crosslinked polyolefin article has embedded therein a heating wire adapted, on the passage of an electric current therethrough, to heat and melt the adjacent surface portion. When this is done with the relevant surface contacting a surface of a crosslinked polyolefin body or article, it is possible to ensure that the surfaces are held together in such a manner as to provide confinement or containment of the molten surface of the non-crosslinked polyolefin, whilst the expansion of the materials as they heat and melt provides the excess pressure required.

It is to be stressed that the Applicants have found that in practical terms the required pressure is that which is required to ensure intimate contact at the melt interface between the two materials to be joined. In the case of two uncrosslinked materials being welded together, both materials would easily soften and flow at elevated temperature rapidly giving the required melt interface, but when one of the materials is crosslinked it will remain intractable at elevated temperature thus often requiring more care in ensuring that there is intimate contact at the melt interface.

In practice in carrying out the invention, the surfaces must be held together in a pressurised melt contained condition for adequate time to enable migration of molecular chains from the molten non-crosslinked polyolefin into the surface of the crosslinked polyolefin and ensure adequate and satisfactory fusion or welding.

It is to be understood that the electrofusion techniques of the present invention can be carried out in any circumstance where an appropriate pressure and melt containment or confinement can be applied.

Pipes or sheathings to which the invention may be applied would include, but not be restricted to, under floor heating and hot/cold water pipes; electrical cable sheathing; steel cable sheathing; district heating pipes and sheathing; flue pipes; industrial pipes; chemical plant pipes.

In order that the invention may be more readily understood, a number of embodiments of the use of the method of the present invention will now be illustrated with reference to the accompanying drawings in which:-
Figure 1 is a schematic sectional elevation through one half of a first embodiment of a pipe joint in accordance with the invention;
Figure 2 is a similar sectional elevation of a second embodiment of a pipe joint in accordance with the invention;
Figure 3 is a similar sectional elevation of a third embodiment of a pipe joint in accordance with the invention;
Figure 4 is a similar sectional elevation of a fourth embodiment of a pipe joint in accordance with the invention;
Figure 5 shows a joint for connecting cable sheathing; and
Figure 6 shows a technique for mending or repairing damaged cable sheathing.

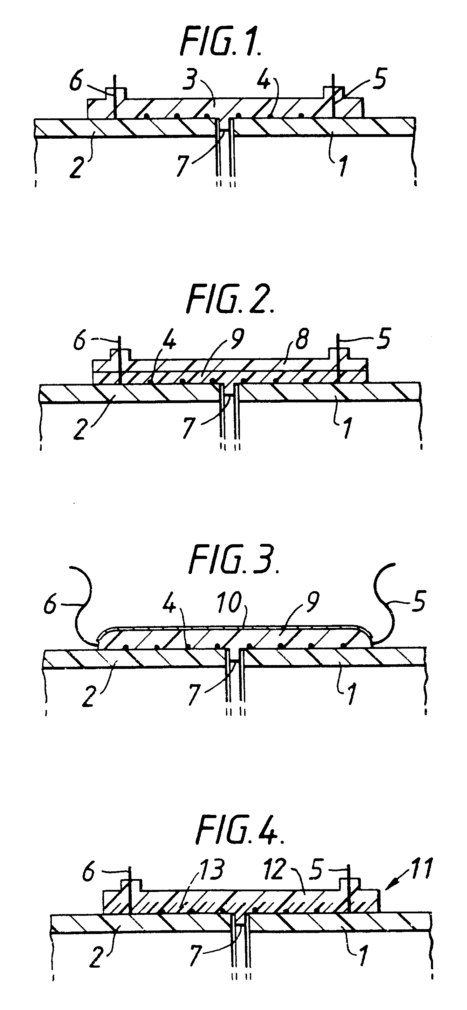

Referring now to the drawings, it will he seen that in Figure 1 there is illustrated a technique for coupling two crosslinked polyethylene pipes 1, 2 by means of a non-crosslinked polyethylene annular coupling sleeve 3. The non-crosslinked polyethylene sleeve is provided with an electrical wire heating element wound helically within it connecting between electrical terminal wires 5, 6. A removable central annular internally protruding register 7 is provided to locate against the ends of the two crosslinked polyethylene pipes. In operation, after assembling the two pipes 1, 2 within the sleeve so as to engage the centre register, electrical current is passed through the wire 4 embedded in the non-crosslinked polyethylene sleeve, so that the non-crosslinked polyethylene melts at its inner surface, whilst the polyethylene pipes are heated on their external radial surfaces.

The heating of the component materials of the inner surface of the non-crosslinked polyethylene layer of the sleeve, and the radially outer surfaces of the juxtaposed pipes, causes a tendency to expand so that their mating surfaces are pressed together under considerable pressure from such expansive force.

Upon disconnecting the electrical terminal wires 5, 6, the sleeve 3 and the pipes 1 and 2 cool and harden and it is found that a most satisfactory joint between the pipes through the use of the sleeve is achieved. The joints are not only firm but are also fluid-tight, and can satisfactorily be subjected to pressure testing at elevated temperature.

In an alternative arrangement a coupling, particularly using a large fitting or sleeve, may incorporate a crosslinked polyolefin formed for example by irradiation or by chemical means, and carrying an embedded heating coil. In this case the sleeve is juxtaposed with and then fused to inserted non-crosslinked polyolefin pipes.

It is, of course, possible to subject the finished connection, including the coupling, to irradiation treatment to provide crosslinking of the non-crosslinked polyethylene sleeve. Alternatively, the sleeve body may be a modified polyethylene containing a crosslinking initiator such as a peroxide initiator, so that during the heating, melting and jointing cycle, the initiator, due to the action of the heat, will ensure crosslinking of the polyethylene sleeve body.

A specific test example of the arrangement of Figure 1 is as follows:-
Two one metre sample lengths of 125mm SDR11 quality polyethylene pipe were irradiated with a Cobalt 60 source to bring about crosslinking of the polyethylene such that when the gel content was measured using a Soxhlet extraction technique, 5 hours with xylene as a solvent, the gel content was found to be 70%. The two crosslinked pipes were inserted into a conventional 125mm electrofusion coupler gas fitting and current passed giving a fusion time of 220 seconds. After allowing cooling the fusion welded assembly was subjected to hydrostatic testing at 80°C and a test pressure of 8bar. Failure of the assembly did not occur for more than 3000 hours.

A modification of the arrangement of Figure 1 is shown in Figure 2. In this case, a rigid sleeve coupling is ensured by means of an outer annular crosslinked polyethylene casing 8 within which is located a non-crosslinked polyethylene liner sleeve 9 with an embedded wire heating element 4. Operation of the jointing method is as with the embodiment of Figure 1.

Figure 3 is similar except that, in this case, rigidity is provided by an annular metal case 10.

The arrangement of Figure 4 is similar to that of Figure 2, except that in this case a unitary sleeve 11 is provided, the sleeve having been previously irradiated by gamma ray or electron beam in such a manner that a radially outer layer 12 is crosslinked, whilst the radially inner layer 13 and inner surface remain non-crosslinked. The usual embedded wire elements enable the heating and weld jointing to take place. Such an arrangement may be subsequently irradiated again to complete the crosslinking of the whole jointing sleeve 11.

The arrangements of Figures 1 to 4 can be modified by using internal jointing sleeves for the pipes.

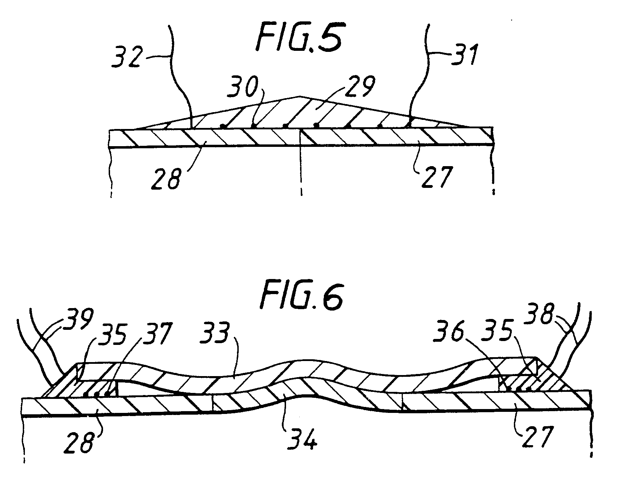

Figure 5 illustrates a connection between crosslinked polyethylene cable sheathing 27, 28, in which the connection is by means of an electrofusion technique. A sleeve 29, tapering from its central portion, of non-crosslinked polyethylene and having embedded an electrical heating wire 30 is fitted about the proposed connection between the sheathing 27, 28. The sleeve 29 may be modified and contain a peroxide initiator. Upon heat application, the usual process of heating the crosslinked sheathing outer surface and melting the sleeve inner surface adjacent to the electrical heating wire, leads to expansion pressure, and containment of the melt from the non-crosslinked sleeve which enables an adequate fusion joint to take place. At the same time, the peroxide initiator within the modified polyethylene sleeve bring about its crosslinking. Electrical terminal wires 31, 32 are conveniently removed after use.

Finally, Figure 6 illustrates a variation of the arrangement shown in Figure 5. In this case, a crosslinked polyethylene heat-shrink tube 33 is used for the repair and insulation of a damaged cable sheathing 34. As usual, the cable sheathing is of crosslinked polyethylene. At each end of the heat-shrink tube an appropriately shaped fillet sleeve 35 tapering to the outer diameter of the cable is inserted under the heat-shrink tubing. Electrofusion heating elements 36, 37 are embedded within the fillet sleeves 35 but separated from both ends of each. Upon passing current through the electrofusion heating elements, a fusion seal between the cable sheathing 27, 28, the fillet sleeves 35 and the heat-shrink tube 33 is obtained. The heat-shrink tube may be shrunk upon the cable sheathing and fillet sleeves either before or during the fusion jointing process. Electrical terminal wires 38, 39 may again be removed after use.

By means of the invention, a surprisingly successful method of jointing non-crosslinked polyolefin bodies with crosslinked bodies and, indeed, (through the intermediary of the body portions of non-crosslinked polyolefin) of jointing crosslinked polyolefin bodies.

## Claims

1. A method of welding a body of crosslinked polyolefin to a body of non-crosslinked polyolefin, said body of crosslinked polyolefin being a pipe, pipe fitting or sheathing and said body of non-crosslinked polyolefin forming at least an inner surface of an annular electrofusion coupling sleeve and having a heating wire embedded therein, the method comprising bringing together the pipe, pipe fitting or sheathing and annular electrofusion coupling sleeve and heating the heating wire so as to melt an adjacent surface of the coupling sleeve and heat a confronting surface of the pipe, pipe fitting or sheathing, the surfaces being held together with confinement or containment of the molten surface of the non-crosslinked polyolefin body generally to its area of melting, whereby expansion of the materials as they heat and melt generates pressure at the surfaces to provide intimate contact therebetween so as to bring about fusion of the surfaces, and thereafter allowing the coupling sleeve and pipe to cool and harden.

2. A method according to Claim 1 wherein the annular coupling sleeve is wholly formed of non-crosslinked polyethylene.

3. A method according to Claim 1 wherein the annular coupling sleeve comprises an outer annular crosslinked polyethylene casing within which is located a non-crosslinked polyethylene liner sleeve with an embedded wire heating element.

4. A method according to Claim 1 wherein the annular coupling sleeve comprises an outer annular metal case within which is located a non-crosslinked polyethylene liner sleeve with an embedded wire heating element.

5. A method according to Claim 1 wherein the annular coupling sleeve is a unitary sleeve, the sleeve having been irradiated by gamma rays or electron beam in such a manner that a radially outer layer thereof is crosslinked whereas a radially inner layer and inner surface thereof remain non-crosslinked.

6. A method according to Claim 5 including the additional step of subsequent irradiation to complete the crosslinking of the whole sleeve.

7. A method according to any one of the preceding Claims in which a pair of crosslinked polyolefin pipes are connected together by the annular electrofusion coupling sleeve.

## Patentansprüche

1. Verfahren zum Schweißen eines Körpers aus vernetztem Polyolefin an einen Körper aus unvernetztem Polyolefin, wobei der genannte Körper aus vernetztem Polyolefin ein Rohr, ein Rohrformstück oder eine Umkleidung ist und der genannte Körper aus unvernetztem Polyolefin mindestens eine Innenfläche einer ringförmigen Elektroverschmelzungskupplungsmuffe formt und einen darin eingebetteten Heizdraht aufweist, wobei das Verfahren das Zusammenbringen des Rohrs, des Rohrformstücks oder der Umkleidung und der ringförmigen Elektroverschmelzungskupplungsmuffe und das Erwärmen des Heizdrahts zum Schmelzen einer angrenzenden Oberfläche der Kupplungsmuffe und zum Erwärmen einer gegenüberliegenden Oberfläche des Rohrs, des Rohrformstücks oder der Umkleidung, wobei die Oberflächen unter Eindämmen oder Einschließen der geschmolzenen Oberfläche des Körpers aus unvernetztem Polyolefin allgemein auf ihren Schmelzbereich zusammengehalten werden, wodurch die Ausdehnung der Stoffe bei ihrem Erwärmen und Schmelzen an den Oberflächen Drücke erzeugt, um sehr guten Kontakt zwischen ihnen vorzusehen, um dadurch ein Verschmelzen der Oberflächen hervorzurufen, und danach das Abkühlen- und Härtenlassen der Kupplungsmuffe und des Rohrs umfaßt.

2. Verfahren nach Anspruch 1, wobei die ringförmige Kupplungsmuffe vollständig aus unvernetztem Polyethylen geformt ist.

3. Verfahren nach Anspruch 1, wobei die ringförmige Kupplungsmuffe einen äußeren ringförmigen Mantel aus vernetztem Polyethylen aufweist, in dem sich eine Einlagemuffe aus unvernetztem Polyethylen mit einem eingebetteten Heizdrahtelement befindet.

4. Verfahren nach Anspruch 1, wobei die ringförmige Kupplungsmuffe einen äußeren ringförmigen Metallmantel aufweist, in dem sich eine Einlagemuffe aus unvernetztem Polyethylen mit einem eingebetteten Heizdrahtelement befindet.

5. Verfahren nach Anspruch 1, wobei die ringförmige Kupplungsmuffe eine unitäre Muffe ist, wobei die Muffe mit Gammastrahlen oder Elektronenstrahl so bestrahlt wurde, daß eine radial äußere Schicht von ihr vernetzt ist, während eine radial innere Schicht und Innenfläche von ihr unvernetzt bleiben.

6. Verfahren nach Anspruch 5 einschließlich des zusätzlichen Schritts der nachfolgenden Bestrahlung zur Vervollständigung der Vernetzung der gesamten Muffe.

7. Verfahren nach einem der vorhergehenden Ansprüche, in dem ein Paar vernetzter Polyolefinrohre durch die ringförmige Elektroverschmelzungskupplungsmuffe miteinander verbunden sind.

## Revendications

1. Une méthode pour souder un corps en polyoléfine réticulée à un corps en polyoléfine non réticulée, ledit corps en polyoléfine réticulée étant un tuyau, un raccord de tuyau ou une enveloppe et ledit corps en polyoléfine non réticulée constituant au moins l'une des surfaces internes d'un manchon de couplage annulaire à électrofusion et comportant un fil de chauffage qui est intégré à celle-ci, la méthode consistant à assembler le tuyau, le raccord de tuyau ou l'enveloppe et le manchon de couplage annulaire a électrofusion et à chauffer le fil de chauffage de manière à faire fondre une surface adjacente du manchon de couplage et à chauffer une surface opposée du tuyau, du raccord de tuyau ou de l'enveloppe, les surfaces étant maintenues ensemble par limitation ou confinement de la surface en fusion du corps en polyoléfine non réticulée, en général sur sa zone de fusion, situation dans laquelle la dilatation des matériaux, au fur et à mesure qu'ils sont chauffés et fondent, provoquent une pression sur les surfaces destinée à créer un contact serré entre celles-ci, de façon à causer la fusion des surfaces, et ultérieurement à permettre au manchon de couplage et au tuyau de refroidir et de durcir.

2. Une méthode, selon les stipulations de la revendication 1, dans laquelle le manchon de couplage annulaire est entièrement constitué de polyéthylène non réticulé.

3. Une méthode, selon les stipulations de la revendication 1, dans laquelle le manchon de couplage annulaire comporte une armure annulaire externe en polyéthylène réticulé dans laquelle se trouve une gaine de garnissage en polyéthylène non réticulé qui incorpore un élément de chauffage à fil.

4. Une méthode, selon les stipulations de la revendication 1, dans laquelle le manchon de couplage annulaire comporte une armure annulaire externe en métal dans laquelle se trouve une gaine de garnissage en polyéthylène non réticulé qui incorpore un élément de chauffage à fil.

5. Une méthode, selon les stipulations de la revendication 1, dans laquelle le manchon de couplage annulaire est un manchon unitaire, le manchon ayant été irradié par des rayons gamma ou un faisceau électronique de façon à ce qu'une couche externe radiale de celui-ci soit réticulée, tandis qu'une couche interne radiale et une surface interne de celui-ci restent non réticulées.

6. Une méthode, selon les stipulations de la revendication 5, y compris l'étape supplémentaire d'une irradiation ultérieure destinée à réticuler le manchon tout entier.

7. Une méthode, selon les stipulations de l'une quelconque des revendications précédentes, dans laquelle une paire de tuyaux en polyoléfine réticulée sont assemblés par le manchon de couplage annulaire à électrofusion.
